# EUROPEAN PATENT APPLICATION

(11) **EP 4 716 251 A1**
(43) Date of publication of application: **25.03.2026**
(21) Application number: 24891758.5
(22) Date of filing: 12.11.2024
(51) Int. Cl.: H04R 3/00, H04W 4/80, H04W 84/12

(54) **ELECTRONIC DEVICE FOR PROVIDING AT LEAST ONE SOUND CHANNEL TO ANOTHER ELECTRONIC DEVICE, AND CONTROL METHOD THEREFOR**

(30) Priority: 15.11.2023 KR 20230158552
(71) Applicant: Samsung Electronics Co., Ltd., Suwon-si, Gyeonggi-do 16677 (KR)
(72) Inventor: KIM, Jongbae, Suwon-si Gyeonggi-do 16677 (KR)
(74) Representative: Appleyard Lees IP LLP
(86) International application number: PCT/KR2024/017880
(87) International publication number: WO 2025/105812

(57) **Abstract**

This electronic device may comprise: a communication interface; at least one memory for storing instructions; and one or more processors connected to the communication interface to control the electronic device, wherein by executing the instructions, the one or more processors: when it is identified that a second electronic device is connected to the electronic device through the communication interface, identify whether a predetermined function is activated in the second electronic device; and control the communication interface to transmit at least one channel among a plurality of channels included in sound information to the second electronic device on the basis of whether it is identified that the predetermined function is activated.

## Description

### [TECHNICAL FIELD]

The present disclosure relates to an electronic device and a control method thereof, and more particularly, to an electronic device for providing at least one sound channel to another electronic device and a control method thereof.

### [BACKGROUND ART]

Various types of electronic devices have been developed in accordance with the development of electronic technology. In particular, various types of speakers have been popularized recently, thus improving user convenience.

For example, a sound bar may be installed with a television (TV) that provides a screen in a shared family space, such as a living room, and may provide a sense of immersion to the user by enabling sound positioning and supporting multi-channel output. Wireless earphones may improve the user convenience by allowing the user to enjoy sound without causing harm to others around the user by being worn on the user's ears.

However, a speaker such as the sound bar has a limitation in channel expansion in terms of installation, and accordingly, there is a need to supplement this limitation in channel expansion through various sound devices.

### [DISCLOSURE]

### [TECHNICAL SOLUTION]

Aspects will be set forth in part in the description which follows and, in part, will be apparent from the description, or may be learned by practice of the presented embodiments.

According to an aspect of the disclosure, an electronic device may include: a communication interface; at least one memory storing instructions; and one or more processors connected to the communication interface and configured to control the electronic device, where, by executing the instructions, the one or more processors are configured to: identify whether a predetermined function is activated in a second electronic device based on the second electronic device being identified as connected to the electronic device through the communication interface, and control the communication interface to transmit, to the second electronic device, at least one channel among a plurality of channels included in sound information based on whether the predetermined function is identified as activated.

The one or more processors may be further configured to: control the communication interface to transmit a predetermined channel among the plurality of channels to the second electronic device in a state in which the predetermined function is identified as activated in the second electronic device, and control the communication interface to transmit the plurality of channels to the second electronic device in a state in which the predetermined function is identified as not activated in the second electronic device.

The predetermined channel may include a woofer channel.

The device may further include a speaker, where the one or more processors are further configured to output, through the speaker, channels other than the at least one channel among the plurality of channels in a state in which the at least one channel is transmitted to the second electronic device.

The one or more processors may be further configured to: control the communication interface to transmit, to the second electronic device, a signal for identifying whether the predetermined function is activated based on the second electronic device being identified as connected to the electronic device through the communication interface, and identify whether the predetermined function is activated based on a signal received from the second electronic device through the communication interface.

A memory among the at least one memory may store specification information of the second electronic device, where the one or more processors are further configured to: identify whether the second electronic device is capable of the predetermined function based on the specification information, and control the communication interface to transmit, to the second electronic device, the signal for identifying whether the predetermined function is activated in a state in which the second electronic device is identified as being capable of the predetermined function.

The device may further include a speaker, where the one or more processors are further configured to: control the communication interface to transmit, to the second electronic device, at least one channel that is less than a predetermined frequency and incapable of negative positioning, and allow at least one channel that is equal to or greater than the predetermined frequency and capable of the negative positioning to be output through the speaker.

The one or more processors may be further configured to: compensate for a latency of the at least one channel, and control the communication interface to transmit the compensated at least one channel to the second electronic device.

The one or more processors may be further configured to: identify a location of the second electronic device, and compensate for the latency based on the location of the second electronic device.

The device may further include a speaker, where the one or more processors are further configured to: output, through the speaker, inaudible sound being less than a predetermined frequency, and compensate for the latency based on delay information received from the second electronic device through the communication interface.

The delay information may include a reception time at which the inaudible sound is received by the second electronic device, where the one or more processors are further configured to compensate for the latency based on a time at which the inaudible sound is output and the reception time at which the inaudible sound is received by the second electronic device.

The predetermined function may include: generating a mixture comprising sound received through a microphone of the second electronic device and sound based on the at least one channel received from the electronic device, and outputting the mixture through a speaker of the second electronic device.

The one or more processors may be further configured to identify whether the predetermined function is activated in the second electronic device in a state in which the second electronic device is identified as connected to the electronic device through the communication interface and the sound information is output as sound.

According to an aspect of the disclosure, provided is a control method of an electronic device, the method may include: identifying whether a predetermined function is activated in a second electronic device based on the second electronic device being identified as connected to the electronic device; and transmitting, to the second electronic device, at least one channel among a plurality of channels included in sound information based on whether the predetermined function is identified as activated.

The transmitting, to the second electronic device, the at least one channel among the plurality of channels may include: transmitting a predetermined channel among the plurality of channels to the second electronic device in a state in which the predetermined function is identified as activated in the second electronic device, and transmitting the plurality of channels to the second electronic device in a state in which the predetermined function is not identified as activated in the second electronic device.

The predetermined channel may include a woofer channel.

According to an aspect of the disclosure, an electronic device may include: a communication interface; at least one memory storing instructions; and one or more processors connected to the communication interface and configured to control the electronic device, where, by executing the instructions, the one or more processors are configured to: identify whether a second electronic device is capable of a predetermined function; identify whether the predetermined function is activated in the second electronic device based on the second electronic device; control the communication interface to transmit, to the second electronic device, at least one channel among a plurality of channels included in sound information based on whether the predetermined function is identified as activated.

The predetermined function may include: generating a mixture comprising sound received through a microphone of the second electronic device and sound based on the at least one channel received from the electronic device, and outputting the mixture through a speaker of the second electronic device.

The device may further include a speaker, where the one or more processors are further configured to: in a state in which the predetermined function is identified as activated, control the communication interface to transmit only the at least one channel, among the plurality of channels included in the sound information, to the second electronic device, and output, through the speaker, channels other than the at least one channel among the plurality of channels in a state in which the at least one channel is transmitted to the second electronic device.

The one or more processors may be further configured to: compensate for a latency of the at least one channel, and control the communication interface to transmit the compensated at least one channel to the second electronic device.

### [DESCRIPTION OF DRAWINGS]

The above and other aspects, features, and advantages of certain embodiments of the present disclosure will be more apparent from the following description taken in conjunction with the accompanying drawings, in which:
FIG. 1 is a block diagram showing a configuration of an electronic system according to an embodiment of the present disclosure;
FIG. 2 is a block diagram showing a configuration of an electronic device according to an embodiment of the present disclosure;
FIG. 3 is a block diagram showing a detailed configuration of the electronic device according to an embodiment of the present disclosure;
FIG. 4 is a block diagram showing a configuration of another electronic device according to an embodiment of the present disclosure;
FIG. 5 is a diagram showing an operation of an electronic system according to an embodiment of the present disclosure;
FIG. 6 is a diagram showing sound processing of another electronic device according to an embodiment of the present disclosure; and
FIG. 7 is a flowchart showing a control method of an electronic device according to an embodiment of the present disclosure.

### [BEST MODE]

The present disclosure provides an electronic device for providing a user with an immersive sound listening experience by using various sound devices, and a control method thereof.

Hereinafter, the present disclosure is described in detail with reference to the accompanying drawings.

General terms currently widely used are selected to be used in embodiments of the present disclosure in consideration of their functions in the present disclosure, and may be changed based on the intentions of those skilled in the art or a judicial precedent, the emergence of a new technique, or the like. In addition, in a specific case, terms arbitrarily chosen by an applicant may exist. In this case, the meanings of such terms are mentioned in detail in corresponding description portions of the present disclosure. Therefore, the terms used in the present disclosure need to be defined on the basis of the meanings of the terms and the contents throughout the present disclosure rather than simple names of the terms.

In the present disclosure, an expression "have", "may have", "include", "may include", "comprise", "may comprise" or the like indicates the existence of a corresponding feature (for example, a numerical value, a function, an operation, or a component such as a part), and does not exclude the existence of an additional feature.

An expression, "at least one of A or/and B" may indicate either "A or B", or "both of A and B". The term "or" may indicate any and all combinations of one or more of a plurality of associated listed items.

Expressions "first", "second", or the like used in the present disclosure may qualify various components regardless of a sequence or importance of the components. These expressions are used only to distinguish one component and another component from each other, and do not limit the corresponding components.

A term referenced in the singular may include plural referents unless explicitly indicated otherwise in the context. It should be understood that a term "include", "formed of", or the like used in this application specifies the presence of features, numerals, steps, operations, components, parts, or combinations thereof, mentioned in the specification, and does not preclude the presence or addition of one or more other features, numerals, steps, operations, components, parts, or combinations thereof.

In the specification, a term "user" may refer to a person using an electronic device or a device using the electronic device (e.g., artificial intelligence electronic device).

Hereinafter, various embodiments of the present disclosure are described in detail with reference to the accompanying drawings.

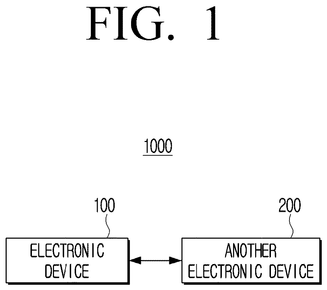

FIG. 1 is a block diagram showing a configuration of an electronic system 1000 according to an embodiment of the present disclosure. As shown in FIG. 1, the electronic system 1000 may include an electronic device 100 and a second electronic device 200.

The electronic device 100 may be a device that outputs sound, and may be implemented as a sound bar, a television (TV), a projector (including a single-focus projector equipped with sound or a projection projector), a desktop personal computer (PC), a laptop, a smartphone, a tablet PC, smart glasses, a smart watch, or the like. However, the electronic device 100 is not limited thereto, and may be any device that has a speaker and may output the sound.

The electronic device 100 may transmit at least one channel among the plurality of channels included in the sound to another electronic device 200. For example, the electronic device 100 may transmit at least one channel among the plurality of channels included in the sound to another electronic device 200 based on whether a predetermined function is activated in another electronic device.

The second electronic device 200 may be a device that is worn by a user and outputs the sound, and may be implemented as earphones, a headset, virtual reality (VR) glasses, augmented reality (AR) glasses, extended reality (XR) glasses, or the like. That is, the user wearing another electronic device 200 may hear the sound output from the second electronic device 200, while people around the user may be unable to hear the sound output from the second electronic device 200 or may only hear the sound at a very low volume, thus preventing damage caused by noise in the surroundings. For the convenience of description below, the sound output from the second electronic device 200 is described as being heard only by the user wearing another electronic device 200.

The second electronic device 200 may be a device supporting a predetermined function. For example, a predetermined function may be a function of mixing sound received through a microphone of another electronic device 200 with at least one channel received from the electronic device 100 and outputting the mixture through a speaker of another electronic device 200, which may be referred to as a transparency function.

However, the second electronic device 200 is not limited thereto, and the second electronic device 200 may be any device that may mix the sound received through its microphone with at least one channel received from the electronic device 100 and output the same through its speaker.

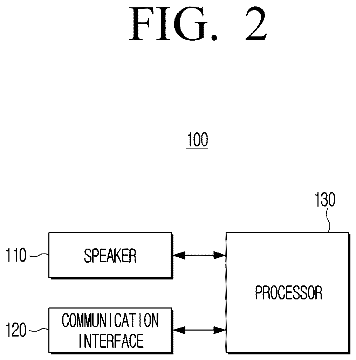

FIG. 2 is a block diagram showing a configuration of the electronic device 100 according to an embodiment of the present disclosure.

Referring to FIG. 2, the electronic device 100 may include a speaker 110, a communication interface 120, and a processor 130. However, the electronic device 100 is not limited thereto, and may include the communication interface 120 and the processor 130.

The speaker 110 may be a component for outputting various notification sounds, an audio message, or the like, as well as various audio data processed by the processor 130. For example, the processor 130 may output signals of some channels included in the sound through the speaker 110.

The speaker 110 may be implemented as a plurality of speakers. For example, the speaker 110 may include a front left speaker, a front right speaker, and a central speaker. However, the speaker 110 is not limited thereto, and may be implemented in various ways.

The communication interface 120 may be a component for communicating with various types of external devices by using various types of communication methods. For example, the electronic device 100 may communicate with the second electronic device 200 through the communication interface 120. For example, the electronic device 100 may communicate with the second electronic device 200 through an ultra-wideband (UWB) communication standard, and in this case, the electronic device 100 may identify a location of the second electronic device 200 through UWB communication.

The communication interface 120 may include a wireless-fidelity (Wi-Fi) module, a Bluetooth module, an infrared communication module, a wireless communication module, or the like. Here, each communication module may be implemented in the form of at least one hardware chip.

The Wi-Fi module and the Bluetooth module may be respectively capable of performing the communication in a Wi-Fi manner and a Bluetooth manner. In case of using the Wi-Fi module or the Bluetooth module, the communication interface 120 may first transmit and receive various connection information such as a service set identifier (SSID) or a session key, connect the communication by using this connection information, and then transmit and receive various information. The infrared communication module may perform the communication based on infrared data association (IrDA) technology of transmitting data wirelessly in a short distance by using an infrared ray between visible and millimeter waves.

In addition to the above-described communication manners, the wireless communication module may include at least one communication chip for performing the communication on the basis of various wireless communication standards such as zigbee, third generation (3G), third generation partnership project (3GPP), long term evolution (LTE), LTE advanced (LTE-A), fourth generation (4G), and fifth generation (5G).

According to an embodiment, the communication interface 120 may include a wired communication interface such as a high definition multimedia interface (HDMI), a display port (DP), a thunderbolt, a universal serial bus (USB), a red-green-blue (RGB) port, a D-subminiature (D-SUB), or a digital visual interface (DVI).

The communication interface 120 may include at least one of wired communication modules for performing the communication by using a local area network (LAN) module, an Ethernet module, a pair cable, a coaxial cable, an optical fiber cable, or the like.

The processor 130 may control overall operations of the electronic device 100. According to an embodiment, the processor 130 may be connected to each component of the electronic device 100 to control the overall operations of the electronic device 100. For example, the processor 130 may be connected to a component such as the speaker 110, the communication interface 120, a memory, and control the operation of the electronic device 100.

The processor 130 may be implemented as at least one processor, and may include at least one of a central processing unit (CPU), a graphics processing unit (GPU), an accelerated processing unit (APU), a many integrated core (MIC), a neural processing unit (NPU), a hardware accelerator, or a machine learning accelerator. At least one processor 130 may control one of other components of the electronic device 100 or any combination thereof, and perform an operation related to the communication or data processing. At least one processor 130 may execute at least one program or instruction stored in the memory. For example, at least one processor 130 may perform a method according to an embodiment of the present disclosure by executing at least one instruction stored in the memory.

If the method according to an embodiment of the present disclosure includes a plurality of operations, the plurality of operations may be performed by one processor or may be performed by the plurality of processors. For example, a first operation, a second operation, and a third operation may be performed by the method according to an embodiment. In this case, the first operation, the second operation, and the third operation may all be performed by a first processor. According to an embodiment, the first operation and the second operation may be performed by the first processor (for example, a general-purpose processor), and the third operation may be performed by a second processor (for example, an artificial intelligence-only processor).

At least one processor 130 may be implemented as a single core processor including a single core, or may be implemented as at least one multicore processor including multicores (for example, homogeneous multicores or heterogeneous multicores). If at least one processor 130 is implemented as the multicore processor, each of the multicores included in the multicore processor may include a processor internal memory such as a cache memory or an on-chip memory, and a common cache shared by the multicores may be included in the multicore processor. In addition, each of the multicores (or some of the multicores) included in the multicore processor may independently read and perform a program instruction for implementing the method according to an embodiment of the present disclosure, or all (or some) of the multicores may be linked to each other to read and perform the program instruction for implementing the method according to an embodiment of the present disclosure.

If the method according to an embodiment of the present disclosure includes the plurality of operations, the plurality of operations may be performed by one core among the multicores included in the multicore processor, or may be performed by the multicores. For example, if the first operation, the second operation, and the third operation may be performed by the method according to an embodiment, the first operation, the second operation, and the third operation may all be performed by a first core included in the multicore processor. Alternatively, the first operation and the second operation may be performed by the first core included in the multicore processor, and the third operation may be performed by a second core included in the multicore processor.

In some embodiments of the present disclosure, at least one processor 130 may indicate a system-on-chip (SoC) in which at least one processor and other electronic components are integrated, the single core processor, the multicore processor, or the core included in the single core processor or the multicore processor. Here, the core may be implemented as the CPU, the GPU, the APU, the MIC, the NPU, the hardware accelerator, the machine learning accelerator, or the like. However, the embodiments of the present disclosure are not limited thereto. For convenience of description, the operation of the electronic device 100 may be described below using an expression, "the processor 130".

The processor 130 may identify whether a predetermined function is activated in the second electronic device 200 if the second electronic device 200 is identified as being connected to the electronic device 100 through the communication interface 120. In some examples, the predetermined function may be the transparency function.

The processor 130 may control the communication interface 120 to transmit, to the second electronic device 200, at least one channel among the plurality of channels included in the sound based on whether the predetermined function is activated.

For example, the processor 130 may control the communication interface 120 to transmit a predetermined channel among the plurality of channels to the second electronic device 200 if the predetermined function is activated in the second electronic device 200, and control the communication interface 120 to transmit the plurality of channels to the second electronic device 200 if the predetermined function is not activated in the second electronic device 200. Here, the predetermined channel may include a woofer channel. That is, the processor 130 may transmit the woofer channel that may cause inter-floor noise to the second electronic device 200, thereby reducing the inter-floor noise caused by the electronic device 100. However, the processor 130 is not limited thereto, and may control the communication interface 120 to transmit another channel that may cause the inter-floor noise as well as the woofer channel to the second electronic device 200. According to an embodiment, the processor 130 may control the communication interface 120 to transmit a channel that the electronic device 100 is unable to reproduce to the second electronic device 200. For example, the processor 130 may control the communication interface 120 to transmit, to the second electronic device 200, a surround channel, a surround back channel, a height channel in ATMOS, or the like that is difficult to reproduce on the TV or the like.

The processor 130 may identify the sound based on a user sound usage history. For example, the processor 130 may control the communication interface 120 to transmit, to the second electronic device 200, at least one channel among the plurality of channels included in the sound that is most recently used if the predetermined function is activated in the second electronic device 200.

However, the processor 130 is not limited thereto, and may provide a request to the user to select the sound. According to an embodiment, the processor 130 may identify whether the predetermined function is activated in the second electronic device 200 if the second electronic device 200 is identified as being connected to the electronic device 100 through the communication interface 120 while the sound is output through the speaker 110. In this case, the processor 130 may control the communication interface 120 to transmit at least one channel among the plurality of channels included in the sound that is being output through the speaker 110 to the second electronic device 200 if the predetermined function is activated in the second electronic device 200.

The processor 130 may output, through the speaker 110, the remaining channels other than at least one channel among the plurality of channels if at least one channel is transmitted to the second electronic device 200. For example, the processor 130 may transmit the woofer channel to the second electronic device 200 and output the remaining channels through the speaker 110. In this case, the predetermined function may be activated in the second electronic device 200, and the second electronic device 200 may thus mix the sound of the remaining channels received through the microphone of the second electronic device 200 with the woofer channel received from the electronic device 100, and output the same through the speaker of the second electronic device 200, thus allowing the user to hear the sound of all channels in three dimensions. In addition, the woofer channel may be output only to the second electronic device 200 to thus prevent the inter-floor noise.

According to an embodiment, the processor 130 may transmit the channel that the electronic device 100 is unable to reproduce to the second electronic device 200, and output the remaining channels through the speaker 110. For example, the processor 130 may transmit the surround channel that the electronic device 100 is unable to reproduce to the second electronic device 200 and output the remaining channels through the speaker 110. In this case, the predetermined function may be activated in the second electronic device 200, and the second electronic device 200 may thus mix the sound of the remaining channels received through the microphone of the second electronic device 200 with the surround channel received from the electronic device 100, and output the same through the speaker of the second electronic device 200, thus allowing the user to feel a more enhanced sense of three-dimensionality. According to an embodiment, the processor 130 may transmit the surround channel and the woofer channel to the second electronic device 200, and output the remaining channels through the speaker 110. Through this operation, the processor 130 may enhance the surround channel while reducing the inter-floor noise.

The processor 130 may control the communication interface 120 to transmit, to the second electronic device 200, a signal for inquiring whether the predetermined function is activated if the second electronic device 200 is identified as being connected to the electronic device 100 through the communication interface 120, and may identify whether the predetermined function is activated based on the signal received from the second electronic device 200 through the communication interface 120.

Alternatively, the electronic device 100 may further include the memory for storing specification information of the second electronic device 200, and the processor 130 may identify whether the second electronic device 200 supports the predetermined function based on the specification information, and control the communication interface 120 to transmit, to the second electronic device 200, the signal for inquiring whether the predetermined function is activated if the second electronic device 200 supports the predetermined function.

However, the electronic device 100 is not limited thereto. The electronic device 100 may further include the memory for storing the specification information of the second electronic device 200, and the processor 130 may identify whether the second electronic device 200 supports the predetermined function based on the specification information, and control the communication interface 120 to transmit the predetermined channel among the plurality of channels and an activation command signal of the predetermined function to the second electronic device 200 if the second electronic device 200 supports the predetermined function. In this case, the second electronic device 200 may activate the predetermined function, and the processor 130 may not transmit, to the second electronic device 200, the signal for inquiring whether the predetermined function is activated.

According to an embodiment, the electronic device 100 may further include the memory for storing the specification information of the second electronic device 200, and the processor 130 may identify whether the second electronic device 200 supports the predetermined function based on the specification information, and control the communication interface 120 to transmit, to the second electronic device 200, a signal for requesting activation of the predetermined function if the second electronic device 200 supports the predetermined function. The processor 130 may control the communication interface 120 to transmit the predetermined channel among the plurality of channels to the second electronic device 200 if the user of the second electronic device 200 activates the predetermined function and a signal indicating that the predetermined function is activated is received from the second electronic device 200. According to an embodiment, the processor 130 may perform no operation if the signal indicating that the predetermined function is activated is not received from the second electronic device 200 for a predetermined time after transmitting the signal for requesting the activation of the predetermined function. That is, if the user turns on the second electronic device 200 and the second electronic device 200 is connected to the electronic device 100, the processor 130 may transmit the signal for requesting the activation of the predetermined function to check whether the user intends to use the second electronic device 200 in linkage with the electronic device 100 or to use the second electronic device 200 separately.

The processor 130 may control the communication interface 120 to transmit, to the second electronic device 200, a signal in at least one channel that is below a predetermined frequency and incapable of negative positioning, and allow a signal in at least one channel that is at the predetermined frequency or above and capable of the negative positioning to be output through the speaker 110.

The processor 130 may compensate for at least one of the level or latency of at least one channel, and control the communication interface 120 to transmit the compensated at least one channel to the second electronic device 200.

For example, the electronic device 100 may further include the memory for storing latency compensation information, and the processor 130 may compensate for the latency based on the latency compensation information. Here, the latency compensation information may be information acquired during an initial setup process of an out-of-the-box experience (OOBE) phase. For example, the latency compensation information may include information for acquiring delay information by changing the location of the second electronic device 200 in the OOBE phase, and reducing a delay based on an average location among the plurality of locations. Here, the delay information may include at least one delay compensation (propagation delay or Bluetooth (BT) delay (a fixed value based on a device)).

According to an embodiment, the processor 130 may identify the location of the second electronic device 200, and compensate for the latency based on the location of the second electronic device 200. For example, the electronic device 100 may further include a sensor, and the processor 130 may identify a location of the user of the second electronic device 200 through the sensor, identify the location of the second electronic device 200 based on the user location, and compensate for the latency based on the location of the second electronic device 200. In an embodiment, the processor 130 may identify the location of the second electronic device 200 through the ultra-wideband (UWB) communication, and compensate for the latency based on the location of the second electronic device 200 if the electronic device 100 is connected to the second electronic device 200 through the UWB communication standard. In an embodiment, the user wearing the second electronic device 200 may identify a distance to the electronic device 100 through a smartphone or the like and provide the identified distance to the electronic device 100, and the processor 130 may compensate for the latency based on the identified distance.

In an embodiment, the processor 130 may output inaudible sound through the speaker 110, and compensate for the latency based on the delay information if the delay information is received from the second electronic device 200 through the communication interface 120. For example, the processor 130 may output the inaudible sound through the speaker 110 if the second electronic device 200 is identified as being connected to the electronic device 100. The second electronic device 200 may acquire information on a reception time point at which the inaudible sound is received, and provide the information on the reception time point to the electronic device 100. The processor 130 may acquire the propagation delay as the delay information based on a time point at which the inaudible sound is output and the reception time point at which the inaudible sound is received by the second electronic device 200, and compensate for the latency based on the delay information. In an embodiment, the delay information may further include the BT delay from receiving at least one channel from the second electronic device 200 to outputting at least one channel. Here, the BT delay may be a data transmission time between a first body and a second body if the second electronic device 200 includes the first body and the second body that is physically distinguished from the first body. In this case, the second electronic device 200 may acquire the BT delay based on the reception time point at which at least one channel is received and a time point at which at least one channel is output through the speaker, and provide the BT delay to the electronic device 100 together with the information on the reception time point at which the inaudible sound is received.

Through the operation above, the user may be provided with the sound having a constant quality regardless of a location movement.

The processor 130 may output a signal in a low frequency range through the speaker 110 based on a specification of the second electronic device 200. For example, the processor 130 may transmit the woofer channel to the second electronic device 200, and output the woofer channel through the speaker 110 based on the specification of the second electronic device 200. In this case, the output of the woofer channel by the electronic device 100 may be lower than output of an original signal, thereby reducing the inter-floor noise while providing the user with the sound in a reinforced low frequency range.

Meanwhile, hereinabove, the processor 130 is described as identifying whether the predetermined function is activated in the second electronic device 200 if the second electronic device 200 is identified as being connected to the electronic device 100 through the communication interface 120 while the sound is output through the speaker 110, and is not limited thereto. For example, the processor 130 may identify whether the predetermined function is activated in the second electronic device 200 if the second electronic device 200 is identified as being connected to the electronic device 100 through the communication interface 120 while not outputting the sound through the speaker 110. In this case, the processor 130 may control the communication interface 120 to transmit the predetermined channel among the plurality of channels to the second electronic device 200 if the predetermined function is activated in the second electronic device 200, and output, through the speaker 110, the remaining channels other than at least one channel among the plurality of channels. According to an embodiment, the processor 130 may control the communication interface 120 to transmit the plurality of channels to the second electronic device 200 if the predetermined function is not activated in the second electronic device 200.

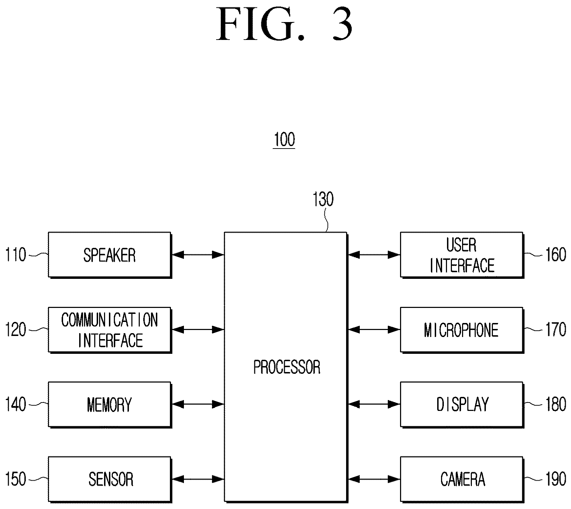

FIG. 3 is a block diagram showing a detailed configuration of the electronic device 100 according to an embodiment of the present disclosure. The electronic device 100 may include the speaker 110, the communication interface 120, and the processor 130. In addition, referring to FIG. 3, the electronic device 100 may further include a memory 140, a sensor 150, a user interface 160, a microphone 170, a display 180, and a camera 190. The description omits detailed descriptions of the components shown in FIG. 3 that overlap with the components shown in FIG. 2.

The memory 140 may refer to hardware for storing information such as data in an electrical or magnetic form for the processor 130 or the like to access the data. For this purpose, the memory 140 may be implemented as at least one hardware among a non-volatile memory, a volatile memory, a flash memory, a hard disk drive (HDD), a solid state drive (SSD), a random access memory (RAM), a read only memory (ROM), or the like.

The memory 140 may store at least one instruction necessary for operating the electronic device 100 or the processor 130. Here, the instruction is a code unit indicating the operation of the electronic device 100 or the processor 130, and may be written in a machine language, which is a language that a computer may understand. According to an embodiment, the memory 140 may store the plurality of instructions for performing a specific task of the electronic device 100 or the processor 130 as an instruction set.

The memory 140 may store data in units of bits or bytes which may represent characters, numbers, images, or the like. For example, the memory 140 may store the specification information of the second electronic device 200.

The memory 140 may be accessed by the processor 130, and the processor 130 may perform the readout, recording, correction, deletion, update, or the like of the instruction, the instruction set, or the data.

The sensor 150 may identify the user located in front of the electronic device 100. For example, the sensor 150 may include a motion sensor, an infrared sensor, or the like, and identify the user location through the motion sensor, the infrared sensor, or the like.

If the sensor 150 includes the plurality of infrared sensors, the plurality of infrared sensors may be arranged in a row in the electronic device 100, and identify an approximate location of the user located around the electronic device 100 based on the presence or absence of reflective waves.

According to an embodiment, the sensor 150 may include an ultrasonic sensor, a depth map, or the like, and may be any component capable of identifying the presence of the user
However, the present disclosure is not limited thereto, and the processor 130 may identify the user location through at least one of the microphone 170 or the camera 190 described below instead of the sensor 150.

The user interface 160 may be implemented as a button, a touch pad, a mouse, a keyboard, or the like, or may be implemented as a touch screen which may perform both a display function and a manipulation input function. Here, the button may be any of various types of buttons such as a mechanical button, a touch pad, a wheel, or the like disposed in any region, such as the front surface portion, side surface portion, or rear surface portion of a body appearance of the electronic device 100.

The microphone 170 may be a component for receiving the sound and convert the same into an audio signal. The microphone 170 may be electrically connected to the processor 130, and receive the sound under the control of the processor 130.

For example, the microphone 170 may be formed as an integral unit integrated with the electronic device 100 in its upper, front, or side direction. According to an embodiment, the microphone 170 may be disposed at a separate remote control from the electronic device 100. In this case, the remote control may receive the sound through the microphone 170, and provide the received sound to the electronic device 100.

The microphone 170 may include various components such as a microphone for collecting the sound in an analog form, an amplifier circuit for amplifying the collected sound, an analog to digital (A/D) conversion circuit for sampling the amplified sound and converting the same into a digital signal, a filter circuit for removing a noise component from the converted digital signal, and the like.

According to an embodiment, the microphone 170 may be implemented in the form of a sound sensor, and may be any component capable of collecting the sound.

The display 180 may be a component for displaying an image, and may be implemented as any of various types of displays such as a liquid crystal display (LCD), an organic light emitting diode (OLED) display, or a plasma display panel (PDP). The display 180 may also include a driving circuit, a backlight unit, and the like, which may be implemented in a form such as an a-si thin film transistor (TFT), a low temperature poly silicon (LTPS) TFT, or an organic TFT (OTFT). According to an embodiment, the display 180 may be implemented as the touch screen coupled with a touch sensor, a flexible display, a three-dimensional (3D) display, or the like.

The camera 190 may be a component for capturing a still or moving image. The camera 190 may capture the still image at a specific time point, and may continuously capture the still images.

The camera 190 may capture the front of the electronic device 100 to thus capture an actual environment in front of the electronic device 100. The processor 130 may identify the user from the image captured by the camera 190.

The camera 190 may include a lens, a shutter, an aperture, a solid-state imaging device, an analog front end (AFE), and a timing generator (TG). The shutter may adjust a time at which light reflected from a subject enters the camera 190, and the aperture may mechanically increase or decrease a size of an opening through which light enters, thereby controlling an amount of light incident on the lens. The solid-state imaging device may output the image by a photocharge as an electrical signal if light reflected from the subject is accumulated as the photocharge. The TG may output a timing signal for reading out pixel data from the solid-state imaging device, and the AFE may sample and digitize the electrical signal output from the solid-state image device.

As described above, the electronic device 100 may provide the user with an immersive sound listening experience without causing harm to the people around the user.

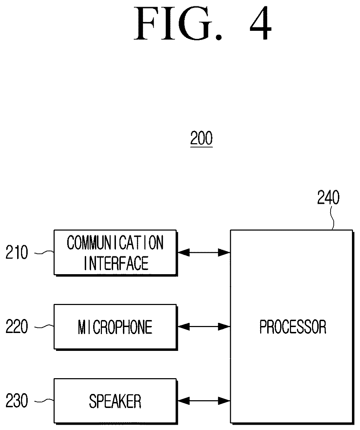

FIG. 4 is a block diagram showing a configuration of the second electronic device 200 according to an embodiment of the present disclosure. The second electronic device 200 may include the first body and the second body that is physically distinguished from the first body. Here, the second body may communicate with the first body in a wireless manner. According to an embodiment, the second electronic device 200 may include the first body and the second body that is connected to the first body in a wired manner. Here, the first body may be worn on a user left ear, and the second body may be worn on a user right ear. However, the second electronic device 200 is not limited thereto, and may be implemented in any of various form factors, and for the convenience of description, each component is described as being implemented in one body.

Referring to FIG. 4, the second electronic device 200 may include a communication interface 210, a microphone 220, a speaker 230, and a processor 240.

The communication interface 210 may be a component for communicating with the various types of external devices by using the various types of communication methods. For example, the second electronic device 200 may communicate with the electronic device 100 through the communication interface 210. For example, the second electronic device 200 may communicate with the electronic device 100 through the ultra-wideband (UWB) communication standard.

The communication interface 210 may include the wireless-fidelity (Wi-Fi) module, the Bluetooth module, the infrared communication module, the wireless communication module, or the like. Here, each communication module may be implemented in the form of at least one hardware chip.

The Wi-Fi module and the Bluetooth module may be capable of respectively performing the communication in the Wi-Fi manner and the Bluetooth manner. In case of using the Wi-Fi module or the Bluetooth module, the communication interface 210 may first transmit and receive the various connection information such as the service set identifier (SSID) or the session key, connect the communication by using this connection information, and then transmit and receive the various information. The infrared communication module may perform the communication based on the infrared data association (IrDA) technology of transmitting data wirelessly in a short distance by using the infrared ray between the visible and millimeter waves.

In addition to the above-described communication manners, the wireless communication module may include at least one communication chip for performing the communication on the basis of the various wireless communication standards such as zigbee, third generation (3G), third generation partnership project (3GPP), long term evolution (LTE), LTE advanced (LTE-A), fourth generation (4G), and fifth generation (5G).

According to an embodiment, the communication interface 210 may include the wired communication interface such as the HDMI, the DP, the thunderbolt, the USB, the RGB port, the D-SUB, or the DVI.

In addition, the communication interface 210 may include at least one of the wired communication modules for performing the communication by using the LAN module, the Ethernet module, the pair cable, the coaxial cable, the optical fiber cable, or the like.

The microphone 220 may be a component for receiving the sound and convert the same into the audio signal. The microphone 220 may be electrically connected to the processor 240, and receive the sound under the control of the processor 240.

For example, the microphone 220 may be formed as an integral unit integrated with the second electronic device 200 in its upper, front, or side direction. According to an embodiment, the microphone 220 may be formed as an integral unit integrated with each of the first body and the second body described below in its upper, front, or side direction.

The microphone 220 may include the various components such as the microphone for collecting the sound in an analog form, the amplifier circuit for amplifying the collected sound, the analog to digital (A/D) conversion circuit for sampling the amplified sound and converting the same into the digital signal, the filter circuit for removing a noise component from the converted digital signal, and the like.

According to an embodiment, the microphone 220 may be implemented in the form of a sound sensor, and may be any component capable of collecting the sound.

The speaker 230 may be a component for outputting the various notification sounds, the audio message, or the like, as well as various audio data processed by the processor 240. For example, the processor 240 may output the signal in at least one channel received from the electronic device 100 through the speaker 230.

The processor 240 may control overall operations of the second electronic device 200. The processor 240 may be connected to each component of the second electronic device 200 to thus control the overall operations of the second electronic device 200. For example, the processor 240 may be connected to a component such as the communication interface 210, the microphone 220, the speaker 230, a memory, a sensor, or the like to control the operation of the second electronic device 200.

The processor 24 may be implemented as least one processor, and may include at least one of the central processing unit (CPU), the graphics processing unit (GPU), the accelerated processing unit (APU), the many integrated core (MIC), the neural processing unit (NPU), the hardware accelerator, or the machine learning accelerator. At least one processor 240 may control one of other components of the second electronic device 200 or any combination thereof, and perform the operation related to the communication or the data processing. At least one processor 240 may execute at least one program or instruction stored in the memory. For example, at least one processor 240 may perform a method according to an embodiment of the present disclosure by executing at least one instruction stored in the memory.

If the method according to an embodiment of the present disclosure includes a plurality of operations, the plurality of operations may be performed by one processor or may be performed by the plurality of processors. For example, the first operation, the second operation, and the third operation may be performed by the method according to an embodiment. In this case, the first operation, the second operation, and the third operation may all be performed by the first processor. According to an embodiment, the first operation and the second operation may be performed by the first processor (for example, the general-purpose processor), and the third operation may be performed by the second processor (for example, the artificial intelligence-only processor).

At least one processor 240 may be implemented as the single core processor including a single core, or may be implemented as at least one multicore processor including multicores (for example, the homogeneous multicores or the heterogeneous multicores). If at least one processor 240 is implemented as the multicore processor, each of the multicores included in the multicore processor may include the processor internal memory such as the cache memory or the on-chip memory, and the common cache shared by the multicores may be included in the multicore processor. In addition, each of the multicores (or some of the multicores) included in the multicore processor may independently read and perform the program instruction for implementing the method according to an embodiment of the present disclosure, or all (or some) of the multicores may be linked to each other to read and perform the program instruction for implementing the method according to an embodiment of the present disclosure.

If the method according to an embodiment of the present disclosure includes the plurality of operations, the plurality of operations may be performed by one core among the multicores included in the multicore processor, or may be performed by the multicores. For example, the first operation, the second operation, and the third operation may be performed by the method according to an embodiment. In this case, the first operation, the second operation, and the third operation may all be performed by the first processor included in the multicore processor. According to an embodiment, the first operation and the second operation may be performed by the first core included in the multicore processor, and the third operation may be performed by the second core included in the multicore processor.

In some embodiments of the present disclosure, at least one processor 240 may indicate the system-on-chip (SoC) in which at least one processor and other electronic components are integrated, the single core processor, the multicore processor, or the core included in the single core processor or the multicore processor. Here, the core may be implemented as the CPU, the GPU, the APU, the MIC, the NPU, the hardware accelerator, the machine learning accelerator, or the like. However, the embodiments of the present disclosure are not limited thereto. However, for convenience of description, the operation of the second electronic device may be described below using an expression, "the processor 240".

According to an embodiment, if the second electronic device 200 is implemented to include the first body and the second body that is physically distinguished from the first body, the communication interface 210 may include a first sub-communication interface included in the first body and a second sub-communication interface included in the second body, the microphone 220 may include a first microphone included in the first body and a second microphone included in the second body, and the speaker 230 may include a first speaker included in the first body and a second speaker included in the second body. The processor 240 may be disposed in one of the first body and the second body, and entirely control the second electronic device 200 by providing a control signal to the body where the processor 240 is not disposed.

The processor 240 may be connected to the electronic device 100 if the second electronic device 200 is turned on. For example, the processor 240 may communicate with the electronic device 100 in the Bluetooth manner based on a history of its past connection to the electronic device 100 if the second electronic device 200 is turned on.

The processor 240 may control the communication interface 210 to transmit, to the electronic device 100, the signal indicating whether the predetermined function is activated if the signal for inquiring whether the predetermined function is activated is received from the electronic device 100 through the communication interface 210.

The processor 240 may mix the sound received through the microphone 220 with at least one channel and output the same through the speaker 230 if at least one channel is received from the electronic device 100 while the predetermined function is activated. Here, at least one channel may include the woofer channel.

The processor 240 may enhance the signal below the predetermined frequency in at least one channel and the sound received through the microphone 220, and mix the enhanced at least one channel with the sound received through the microphone 220 to thus output the same through the speaker 230.

The second electronic device 200 may further include a memory for storing hearing impairment profile information of the user of the second electronic device 200, and the processor 240 may process at least one channel and the sound received through the microphone 220 based on the hearing impairment profile information, and mix the processed at least one channel with the processed sound to thus output the same through the speaker 230. According to an embodiment, the processor 240 may process only the sound received through the microphone 220 based on the hearing impairment profile information, and mix at least one channel with the processed sound to thus output the same through the speaker 230.

The processor 240 may compensate for at least one channel and a frequency band corresponding to the hearing impairment profile information from the sound received through the microphone 220, and mix the compensated at least one channel with the compensated sound to thus output the same through the speaker 230. Through this operation, the processor 240 may provide the same sound experience to a hearing-impaired user and other users.

The second electronic device 200 may further include the sensor, and the processor 240 may identify a rotation of the second electronic device 200 through the sensor, process at least one channel based on the rotation of the second electronic device 200, and mix the processed at least one channel with the sound received through the microphone 220 to thus output the same through the speaker 230.

According to an embodiment, the processor 240 may identify the rotation of the second electronic device 200 and a head orientation of the user wearing the second electronic device 200 through the sensor, process at least one channel based on the rotation of the second electronic device 200 and the head orientation of the user, and mix the processed at least one channel with the sound received through the microphone 220 to thus output the same through the speaker 230. Through this operation, the processor 240 may improve positioning performance of the sound received from the electronic device 100. For example, the processor 240 may improve the positioning performance by providing the surround channel based on the rotation of the second electronic device 200 and the head orientation of the user. Here, information on the head orientation may include information on an up-down angle of the head.

If location information of the second electronic device 200 is received from the electronic device 100 through the communication interface 210, the processor 240 may process the sound received through the microphone 220 based on the location information, and mix at least one channel with the processed sound to thus output the same through the speaker 230.

The second electronic device 200 may further include the user interface, and the processor 240 may control the communication interface 210 to transmit a user command to the electronic device 100, and perform an operation corresponding to the user command if the user command is received through the user interface. For example, if a turn-off command is received, the processor 240 may control the communication interface 210 to transmit the turn-off command to the electronic device 100, and turn off the second electronic device 200.

The processor 240 may perform an operation to supplement the low frequency range based on the specification of the second electronic device 200. For example, the processor 240 may transmit a signal for requesting the electronic device 100 to output the low frequency range based on the specification of the second electronic device 200. For example, the processor 240 may transmit, to the electronic device 100, a signal for requesting the electronic device 100 to output the woofer channel, based on the specification of the second electronic device 200 if the signal received from the electronic device 100 includes the woofer channel. In this case, the second electronic device 200 may output the woofer channel, and the electronic device 100 may also output the woofer channel. However, the output of the woofer channel by the electronic device 100 may be lower than the output of the original signal, thereby providing the user with the sound in the reinforced low frequency range while reducing the inter-floor noise.

However, the processor 240 is not limited thereto, and may perform an operation to supplement the low frequency range through a device other than the electronic device 100 based on the specification of the second electronic device 200. For example, the processor 240 may transmit a signal for requesting low frequency output to another device connected to the same network as the second electronic device 200 based on the specification of the second electronic device 200.

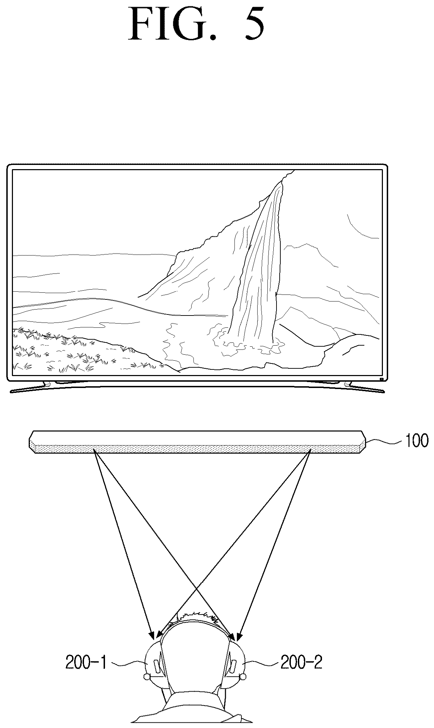

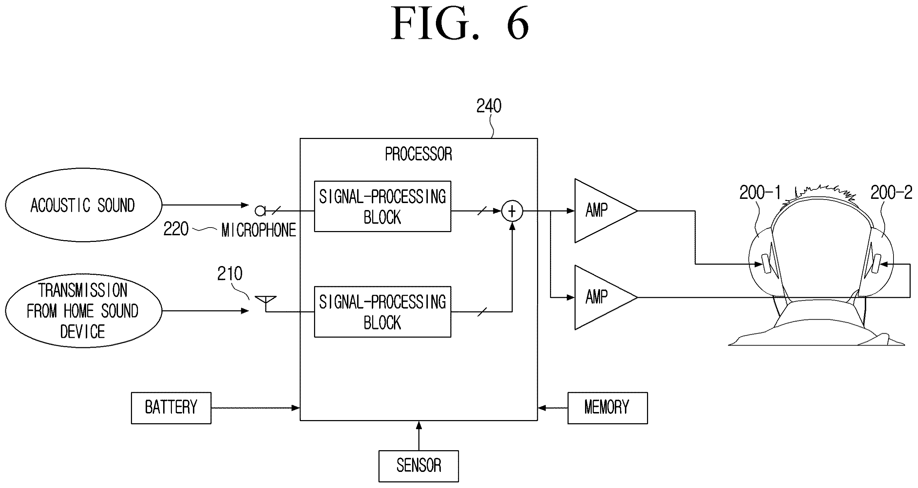

Hereinafter, the description describes the operation of the electronic device 100 in more detail with reference to FIGS. 5 and 6. For convenience of description, the description describes some embodiments as individual embodiments with reference to FIGS. 5 and 6. However, the individual embodiments described with reference to FIGS. 5 and 6 may be implemented in any combination thereof.

FIG. 5 is a diagram showing an operation of the electronic system 1000 according to an embodiment of the present disclosure.

The electronic system 1000 may include the electronic device 100 and second electronic devices 200-1 and 200-2.

The processor 130 of the electronic device 100 may receive the sound from the TV and output the received sound through the speaker 110, as shown in FIG. 5.

The processor 130 may identify whether the predetermined function is activated in the second electronic devices 200-1 and 200-2 if the second electronic devices 200-1 and 200-2 are identified as being connected to the electronic device 100 while the sound is output.

The processor 130 may control the communication interface 120 to transmit the predetermined channel among the plurality of channels to the second electronic devices 200-1 and 200-2 if the predetermined function is activated in the second electronic devices 200-1 and 200-2, and output, through the speaker 110, the remaining channels other than at least one channel among the plurality of channels. Here, the predetermined channel may include the woofer channel.

The processor 240 of the second electronic devices 200-1 and 200-2 may receive at least one channel from the electronic device 100 through the communication interface 210, and receive the remaining channels output by the speaker 110 of the electronic device 100 through the microphone 220.

The processor 240 may mix at least one channel with the remaining channels and output the same through the speaker 230.

That is, the electronic device 100 may minimize damage to the surroundings by outputting the remaining channels other than the channel that may cause the inter-floor noise, such as the woofer channel.

The second electronic devices 200-1 and 200-2 may mix the woofer channel with the remaining channels output by the electronic device 100 and provide the same to the user, thus allowing the user to hear the sound of all channels, and allowing the user to be provided with a sense of immersion and three-dimensionality.

FIG. 6 is a diagram showing sound processing of second electronic devices 200-1 and 200-2 according to an embodiment of the present disclosure.

The processor 240 of the other electronic devices 200-1 and 200-2 may receive at least one channel from the electronic device 100 through the communication interface 210. Here, the electronic device 100 may output the remaining channels other than at least one channel through the speaker 110, and the processor 240 may receive the remaining channels through the microphone 220.

The processor 240 may signal-process at least one channel received through the communication interface 210, and signal-process the remaining channels received through the microphone 220. Here, at least one channel may be a portion of original sound data, and the remaining channels may be, for example, channel L and channel R that are mixed and output through the speaker 110. In addition, the remaining channels received through the microphone 220 may further include noise around the second electronic device 200. Accordingly, the processor 240 may signal-process at least one channel and the remaining channels in different ways.

The processor 240 may acquire a first signal to be output from a first body 200-1 and a second signal to be output from a second body 200-2 by mixing the signal-processed at least one channel with the signal-processed remaining channels, amplify each of the first signal and the second signal, provide and output the same to the corresponding body.

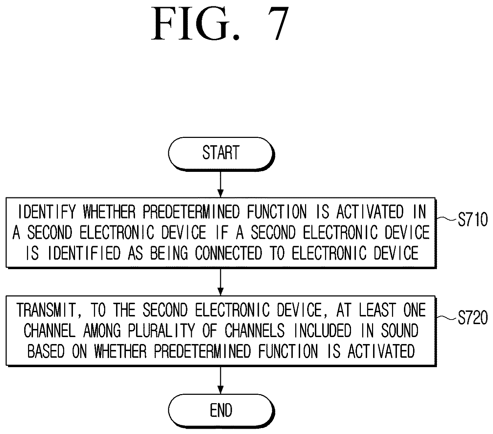

FIG. 7 is a flowchart showing a control method of an electronic device according to an embodiment of the present disclosure.

First, the method may include identifying whether the predetermined function is activated in the second electronic device if the second electronic device is identified as being connected to the electronic device (S710). In addition, the method may include transmitting, to the second electronic device, at least one channel among the plurality of channels included in the sound based on whether the predetermined function is activated (S720).

In addition, in the transmitting (S720), the predetermined channel among the plurality of channels may be transmitted to the second electronic device if the predetermined function is activated in the second electronic device, and the plurality of channels may be transmitted to the second electronic device if the predetermined function is not activated in the second electronic device.

In addition, the predetermined channel may include the woofer channel.

In addition, the method may further include outputting, through the speaker, the remaining channels other than at least one channel among the plurality of channels if at least one channel is transmitted to the second electronic device.

In addition, in the identifying (S710), the signal for inquiring whether the predetermined function is activated may be transmitted to the second electronic device, and whether the function is activated may be identified based on the signal received from the second electronic device if the second electronic device is identified as being connected to the electronic device.

In addition, in transmitting of the signal, whether the second electronic device supports the predetermined function may be identified based on the specification information of the second electronic device, and the signal for inquiring whether the predetermined function is activated may be transmitted to the second electronic device if the second electronic device supports the predetermined function.

In addition, in the transmitting (S720), the signal in at least one channel that is below the predetermined frequency and incapable of negative positioning may be transmitted to the second electronic device, and the signal in at least one channel that is at the predetermined frequency or above and capable of the negative positioning may be output through the speaker.

In addition, the transmitting (S720), at least one of the level or latency of at least one channel may be compensated for, and the compensated at least one channel may be transmitted to the second electronic device.

In addition, the method may further include identifying a location of the second electronic device, and in the transmitting, the latency may be compensated for based on the location of the second electronic device.

According to an embodiment, the method may further include outputting the inaudible sound through the speaker, and in the transmitting, the latency may be compensated for based on the delay information if the delay information is received from the second electronic device.

In addition, the predetermined function may be a function of mixing the sound received through the microphone of the second electronic device with at least one channel received from the electronic device, and outputting the same through the speaker of the second electronic device.

In addition, in the identifying (S710), whether the predetermined function is activated in the second electronic device may be identified if the second electronic device is identified as being connected to the electronic device while the sound is output through the speaker of the electronic device.

According to the various embodiments of the present disclosure, the electronic device may provide the user with the immersive sound listening experience without causing harm to the people around the user.

According to an embodiment of the present disclosure, the various embodiments described above may be implemented in software including an instruction stored in a machine-readable storage medium (for example, a computer-readable storage medium). A machine may be a device that invokes the stored instruction from the storage medium, may be operated based on the invoked instruction, and may include the electronic device (e.g., electronic device A) according to the disclosed embodiments. If the instruction is executed by the processor, the processor may directly perform a function corresponding to the instruction or another component may perform the function corresponding to the instruction under the control of the processor. The instruction may include codes generated or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

In addition, according to an embodiment of the present disclosure, the method according to the various embodiments described above may be provided by being included in a computer program product. The computer program product may be traded as a product between a seller and a purchaser. The computer program product may be distributed in the form of a storage medium (for example, a compact disc read only memory (CD-ROM)) capable of being read by the machine or online through an application store (for example, PlayStore^{™}). In case of the online distribution, at least portions of the computer program product may be at least temporarily stored in or temporarily provided to a storage medium such as a memory of a server of a manufacturer, a server of an application store or a relay server.

In addition, according to an embodiment of the present disclosure, the various embodiments described above may be implemented in a computer-readable recording medium or a recording medium readable by a similar device by using software, hardware, or a combination of software and hardware. In some cases, the embodiments described in the specification may be implemented by the processor itself. In software implementation, the embodiments such as the procedures and functions described in the specification may be implemented by separate software modules. Each of the software modules may perform one or more functions and operations described in the specification.

Computer instructions for performing processing operations of the machine according to the various embodiments described above may be stored in a non-transitory computer-readable medium. The computer instructions stored in the non-transitory computer-readable medium allow a specific machine to perform the processing operations in the machine according to the various embodiments described above if the instructions are executed by a processor of the specific machine. The non-transitory computer-readable medium is not a medium that temporarily stores data therein, such as a register, a cache, or a memory, and indicates a medium that semi-permanently stores data therein and is readable by a machine. A specific example of the non-transitory computer-readable medium may include a compact disk (CD), a digital versatile disk (DVD), a hard disk, a Blu-ray disk, a universal serial bus (USB), a memory card, a read-only memory (ROM), or the like.

In addition, each of the components (e.g., modules or programs) according to the various embodiments described above may include one entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although the embodiments are shown and described in the present disclosure as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic device comprising:
a communication interface;
at least one memory storing instructions; and
one or more processors connected to the communication interface and configured to control the electronic device,
wherein, by executing the instructions, the one or more processors are configured to:
identify whether a predetermined function is activated in a second electronic device based on the second electronic device being identified as connected to the electronic device through the communication interface, and
control the communication interface to transmit, to the second electronic device, at least one channel among a plurality of channels included in sound information based on whether the predetermined function is identified as activated.

2. The device as claimed in claim 1, wherein the one or more processors are further configured to:
control the communication interface to transmit a predetermined channel among the plurality of channels to the second electronic device in a state in which the predetermined function is identified as activated in the second electronic device, and
control the communication interface to transmit the plurality of channels to the second electronic device in a state in which the predetermined function is identified as not activated in the second electronic device.

3. The device as claimed in claim 2, wherein the predetermined channel comprises a woofer channel.

4. The device as claimed in claim 1, further comprising a speaker,
wherein the one or more processors are further configured to output, through the speaker, channels other than the at least one channel among the plurality of channels in a state in which the at least one channel is transmitted to the second electronic device.

5. The device as claimed in claim 1, wherein the one or more processors are further configured to:
control the communication interface to transmit, to the second electronic device, a signal for identifying whether the predetermined function is activated based on the second electronic device being identified as connected to the electronic device through the communication interface, and
identify whether the predetermined function is activated based on a signal received from the second electronic device through the communication interface.

6. The device as claimed in claim 5, wherein a memory among the at least one memory is storing specification information of the second electronic device,
wherein the one or more processors are further configured to:
identify whether the second electronic device is capable of the predetermined function based on the specification information, and
control the communication interface to transmit, to the second electronic device, the signal for identifying whether the predetermined function is activated in a state in which the second electronic device is identified as being capable of the predetermined function.

7. The device as claimed in claim 1, further comprising a speaker,
wherein the one or more processors are further configured to:
control the communication interface to transmit, to the second electronic device, at least one channel that is less than a predetermined frequency and incapable of negative positioning, and
allow at least one channel that is equal to or greater than the predetermined frequency and capable of the negative positioning to be output through the speaker.

8. The device as claimed in claim 1, wherein the one or more processors are further configured to:
compensate for a latency of the at least one channel, and
control the communication interface to transmit the compensated at least one channel to the second electronic device.

9. The device as claimed in claim 8, wherein the one or more processors are further configured to:
identify a location of the second electronic device, and
compensate for the latency based on the location of the second electronic device.

10. The device as claimed in claim 8, further comprising a speaker,
wherein the one or more processors are further configured to:
output, through the speaker, inaudible sound being less than a predetermined frequency, and
compensate for the latency based on delay information received from the second electronic device through the communication interface.

11. The device as claimed in claim 1, wherein the predetermined function comprises:
generating a mixture comprising sound received through a microphone of the second electronic device and sound based on the at least one channel received from the electronic device, and
outputting the mixture through a speaker of the second electronic device.

12. The device as claimed in claim 1, wherein the one or more processors are further configured to identify whether the predetermined function is activated in the second electronic device in a state in which the second electronic device is identified as connected to the electronic device through the communication interface and the sound information is output as sound.

13. A control method of an electronic device, the method comprising:
identifying whether a predetermined function is activated in a second electronic device based on the second electronic device being identified as connected to the electronic device; and
transmitting, to the second electronic device, at least one channel among a plurality of channels included in sound information based on whether the predetermined function is identified as activated.

14. The method as claimed in claim 13, wherein the transmitting, to the second electronic device, the at least one channel among the plurality of channels comprises:
transmitting a predetermined channel among the plurality of channels to the second electronic device in a state in which the predetermined function is identified as activated in the second electronic device, and
transmitting the plurality of channels to the second electronic device in a state in which the predetermined function is not identified as activated in the second electronic device.

15. The method as claimed in claim 14, wherein the predetermined channel includes a woofer channel.
